# EUROPEAN PATENT APPLICATION

(11) **EP 2 746 077 A2**
(43) Date of publication of application: **25.06.2014**
(21) Application number: 13445004.8
(22) Date of filing: 26.11.2013
(51) Int. Cl.: B60C 27/06

(54) **Anti-skid device**

(30) Priority: 05.12.2012 SE 1200750
(71) Applicant: Strömberg, Leif, 590 34 Tjällmo (SE)
(72) Inventor: Strömberg, Leif, 590 34 Tjällmo (SE)
(74) Representative: Berglund, Erik Wilhelm

(57) **Abstract**

Fixation device for antiskid devices that includes a circular connection arranged on the inside of the tire facing the vehicle with a circumference that is less than that of the tire. The fixing device includes a centered journalling applied, on the outside of the wheel, for a hub or plate (6) rotatable in relation to the wheel, to which plate an in inner end of three, or more chain pieces (4) or the like are fastened, which chain pieces or the like are intended to be arranged radially and connected with the antiskid device.

## Description

Snow chains are mounted as the name indicates on vehicle wheels in order to increase traction at snowy conditions. Similar antiskid devices comprising chains are used also when driving in the terrain in order to improve "traction". In order to keep these snow chains and antiskid devices in place on respective wheels theay have on each side of the wheel short radial chain connections that extends a distance inward and that in their radially inner end are connected by between them extending chain pieces or a wire so that a chain ring with a smaller diameter than the wheel is obtained in order to reduce the risk of axial displacement. Antiskid devices and snow chains are mostly referred to as simply chains.

At for instance wood harvesting machines, today in order to reduce the ground pressure, and at rocky ground obtain a more even travel, by the wheel resting on several stones at the same time, very wide wheels are used and likewise antiskid devices. In the same way as at more narrow wheels you try to prevent axial displacement of the chains laterally and thereby caused falling of. However it has turned out that the chains although remaining on the tire sometimes however can turn or pivot in relation to the wheel so that they become angled laterally in relation to the wheel and end up more or less crosswise.

At a repeated lateral influence on the chain in opposite directions at diametrically opposite positions on the chain the result can be that the chain is turned as a spherical bearing on a ball so that it is no more parallel with the thread of the wheel but instead skew or crosswise relative this. Since the tires are wide the above mentioned rings on the sides comprising a wire or chain on the antiskid devises are so far apart in the running direction of the wheel that they there can reach around a chord. The chains will not be free from the tire but since the chain can end up more or less oblique it may wear on the wheel suspension and journaling of the wheel. Since the antiskid devices (chains) often are provided with hard metal reinforced wearing areas they may quickly cause large and expensive damages.

The driver must thus in addition to concentrate on the actual work constantly monitor if the chains are sitting as they should, which even may include climbing down from the machine. If a chain has started to turn obliquely he must turn it right or maybe remount the antiskid device, which is lost working time. When the skid device ends up askew it will also be seated very firmly. In the worst case the joint of the antiskid device may be situated on the inner side of the wheel between this and the suspension so that it is not only to open it and put it back. It may be necessary to pry the antiskid device right with an iron bar or the like with successive small movements and now and again you have to climb up in the machine to drive this a short distance so that the location were tire and the antiskid device are in contact with the ground become available for prying. If an antiskid device end up askew one can calculate with at least a half hour in lost working time each time it happens.

The object of the invention is to reduce the risk of antiskid devices ending up askew.

The above problem is solved in accordance with the invention by on the outside of the wheel apply a fixing device in accordance with claim 1.

The antiskid device fixing prevents the antiskid device from being drawn over towards the rear side by the radial chain pieces fastened in the hub resisting this movement.

Furthermore the antiskid device is prevented from being pulled over towards the front side. This depending on that a possible, the antiskid device displacing force at the circumference of the wheel in axial direction outward via the radial short chain connections on the inside of the wheel is transferred from the antiskid device inward to the inner chain ring. The chain ring in turn transfer the pulling force to one or several diametrically opposite radial chain connections on the inside of the wheel. These radial chain pieces prevent then the thread itself of the antiskid device from being displaced outward. Pulling forces inward as well as outward on the chain are thus taken up and prevents from resulting in an axial lateral movement for the antiskid device that in other words is prevented from turning and ending up askew.

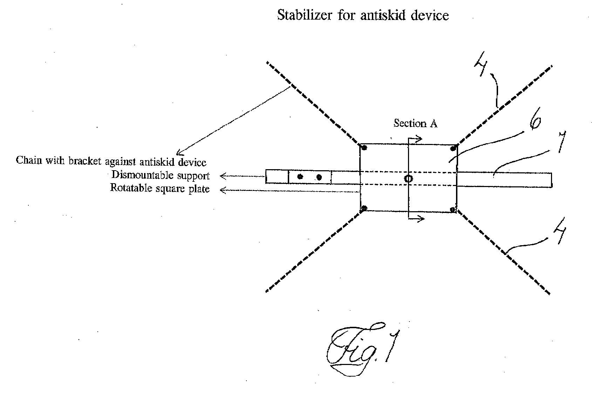

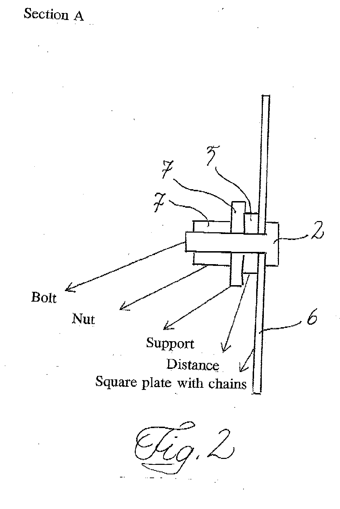

Further characteristics and advantages of the invention are apparent from the patent claims and the following description of an embodiment of the invention. At this fig 1 show the device according to the invention seen from the side and fig 2 a cross section through a detail of the fixing device shown in fig 1.

The embodiment of the invention depicted in the drawings comprise a flat peace of iron or a stud that can be fastened to the outside of a wheel provided with an antiskid device at two diametrically located wheel bolts. Centered in relation to the wheel on the flat piece 3 of iron a turning journalling is fastened for a hub in the shape of a rectangular plate 6 that may also be square. In the corners of the plate chain pieces 4 are fastened, for instance by welding of the inner most link to the plate. From the plate 6 the chain pieces 4 extend to the antiskid device where they are connected to this with a schackle, link chain or the like.

Since the radial chains are turnable in relation to the wheel the antiskid devices are not prevented from the slow mutual slipping/turning movement that take place in circumferential direction between wheel and antiskid device due to driving and braking forces.

The journalling for turning movement comprise a bolt 2 that extends through a centered hole in the plate 6, through a distance 5, further through a hole in the flat iron bar and into a nut 7. A robust and simple bearing that will survive, even if other bearings may be considered.

The invented fixing device can be mounted afterwards on practically all antiskid devices but may of course also from the beginning be integrated with new antiskid devices. The fixing of the antiskid device at the wheel is very reliable even if this and the wheel become worn.

Since it does not matter to any great extent if the short chain pieces 4 are to long and a link or two hangs freely the fixation device according to the invention is very adaptable to different inner diameters of the antiskid device.

The invention reduce essentially the need of constant monitoring of the antiskid devices and facilitate for the driver to concentrate on the work and reduce the risk of damages to the machine as well as the work with correcting chains.

## Claims

1. Fixing device for antiskid devices that includes an on the inner side of a tire facing the vehicle arranged circular connection with a circumference that is less then that of the tire, **characterized in that** it includes a, for applying on the outside of the wheel intended essentially centered journalling for a hub, rotatable in relation to the wheel, at which hub an inner end of three or more pieces of chains or the like are fastened, which chain pieces or the like are intended to be arranged radially and connected to the antiskid device.

2. Fixing device according to claim 1, **characterized in that** the number of chain pieces are four.

3. Fixing device according to any of the claims 1 or 2, **characterized in that** the hub, for preventing of chain disorder even at a very worn chain, has the chain brackets in the radial direction placed so far out that they not even at a very worn chain and wheel can become tangled, for instance so that the chain brackets are located more than a fifths of the wheel radius out from the center.

4. Fixing device, **characterized in that** the hub has the shape of a disk.

5. Fixing device according to any of the preceding claims, **characterized in that** the journalling is arranged on a flat peace of iron or disc provided with holes for fastening on two or several of the wheel bolts of the wheel.

6. Antiskid device, **characterized in that** it is provided with a fixing device according to one or several of the claims 1 to 5.

7. Antiskid device according to claim 6, **characterized in that** also on the outer side of the wheel a circular connection is provided with a circumference that is less than that of the tire.
